# EUROPEAN PATENT SPECIFICATION

(11) **EP 3 984 849 B1**
(45) Date of publication and mention of the grant of the patent: **26.06.2024**
(21) Application number: 21201076.3
(22) Date of filing: 05.10.2021
(51) Int. Cl.: B60W 30/18

(54) **DRIVER ASSISTANCE DEVICE**
FAHRERASSISTENZVORRICHTUNG
DISPOSITIF D'ASSISTANCE AU CONDUCTEUR

(30) Priority: 15.10.2020 JP 2020173759
(43) Date of publication of application: 20.04.2022
(73) Proprietor: TOYOTA JIDOSHA KABUSHIKI KAISHA, Toyota-shi, Aichi-ken 471-8571 (JP)
(72) Inventor: NISHIMOTO, Tatsuya, TOYOTA-SHI, AICHI-KEN, 471-8571 (JP)
(74) Representative: Cabinet Beau de Loménie

(56) References cited:
- EP-A1- 3 683 114
- EP-A2- 1 101 676
- US-A1- 2001 027 372

## Description

### BACKGROUND OF THE INVENTION

### 1. Field of the Invention

The present invention relates to driver assistance devices. For example, the driver assistance device is used in the technical field of deceleration assistance.

### 2. Description of Related Art

For example, a device that performs deceleration assistance control when predetermined conditions are satisfied and cancels the deceleration assistance control when the predetermined conditions are no longer satisfied has been proposed as this type of device (see Japanese Unexamined Patent Application Publication No. 2020-111218 (JP 2020-111218 A)). European Patent Application Publication No. EP1101676A2 discloses a vehicle deceleration force control device and control method thereof for adding a deceleration force to a vehicle, and more particularly to a vehicle deceleration force control device and control method thereof for adding deceleration force to a vehicle in accordance with an operation state of an accelerator. United States Patent Application Publication No. US20010027372A1 discloses a method for terminating a braking intervention of an adaptive cruise control system for a motor vehicle in which the braking intervention is terminated in accordance with a predefined algorithm in response to a driver overriding the adaptive cruise control system.

### SUMMARY OF THE INVENTION

In JP 2020-111218 A, one of the predetermined conditions is that an accelerator pedal has been released (that is, the accelerator pedal is not being depressed). Accordingly, when a driver depresses the accelerator pedal during the deceleration assistance control (that is, when there is what is called an override), the above predetermined condition is no longer satisfied and the deceleration assistance control will be canceled. At this time, the driver may feel a sudden change in deceleration (what is called a drop in g-force) depending on how the deceleration assistance control is canceled. That is, the driver may feel discomfort depending on how the deceleration assistance control is canceled.

The present invention provides a driver assistance device capable of reducing the possibility that a driver may feel discomfort when deceleration assistance control is canceled due to the driver's operation of an accelerator pedal.

A first aspect of the present invention is a driver assistance device according to claim 1.

In the first aspect, the control unit may be configured to, when cancelling the deceleration assistance control, reduce the deceleration control amount for the deceleration assistance control quickly based on the degree of the operation of the accelerator pedal being higher than a predetermined degree compared to the degree of the operation of the accelerator pedal being lower than the predetermined degree.

In the first aspect, the control unit may be configured to, when cancelling the deceleration assistance control, reduce the deceleration control amount for the deceleration assistance control quickly based on the degree of the operation of the accelerator pedal being high compared to the degree of the operation of the accelerator pedal being lower.

In the first aspect, the control unit may be configured to, when cancelling the deceleration assistance control, reduce the deceleration control amount for the deceleration assistance control such that the higher the degree of the operation of the accelerator pedal, the more quickly the deceleration control amount for the deceleration assistance control is reduced.

In the first aspect, the degree of the operation may be represented as an index based on at least one of a stroke of the accelerator pedal, a change in the stroke per unit time, a depressing force on the accelerator pedal, and a change in the depressing force per unit time.

In the first aspect, the control unit may be configured to change a way of reducing the deceleration control amount according to the operation of the accelerator pedal performed after cancellation of the deceleration assistance control is started, when cancelling the deceleration assistance control.

In the first aspect, the deceleration assistance control may be performed when the driver is not depressing the accelerator pedal and deceleration of the vehicle is equal to or smaller than a predetermined value.

In the first aspect, the deceleration assistance control may be performed when the driver is not depressing the accelerator pedal and a distance between an object for deceleration and the vehicle is equal to or greater than a predetermined distance, the object being an object that requires the vehicle to decelerate or stop.

According to the first aspect of the present invention, the possibility can be reduced that the driver may feel discomfort when the deceleration assistance control is canceled due to the driver's operation of the accelerator pedal.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1A illustrates the concept of deceleration assistance control;
FIG. 1B illustrates the concept of the deceleration assistance control;
FIG. 2 shows an example of a change in deceleration for the deceleration assistance control;
FIG. 3 is a block diagram showing a configuration of a driver assistance device according to an embodiment;
FIG. 4 is a flowchart of an operation of the driver assistance device according to the embodiment;
FIG. 5A illustrates an example of a method for determining the degree of accelerator operation;
FIG. 5B illustrates an example of the method for determining the degree of accelerator operation;
FIG. 6A shows an example of a change in deceleration when the driver assistance device according to the embodiment cancels the deceleration assistance control;
FIG. 6B shows an example of a change in deceleration when the driver assistance device according to the embodiment cancels the deceleration assistance control; and
FIG. 7 shows an example of a change in deceleration when a driver assistance device according to a modification cancels the deceleration assistance control.

### DETAILED DESCRIPTION OF EMBODIMENTS

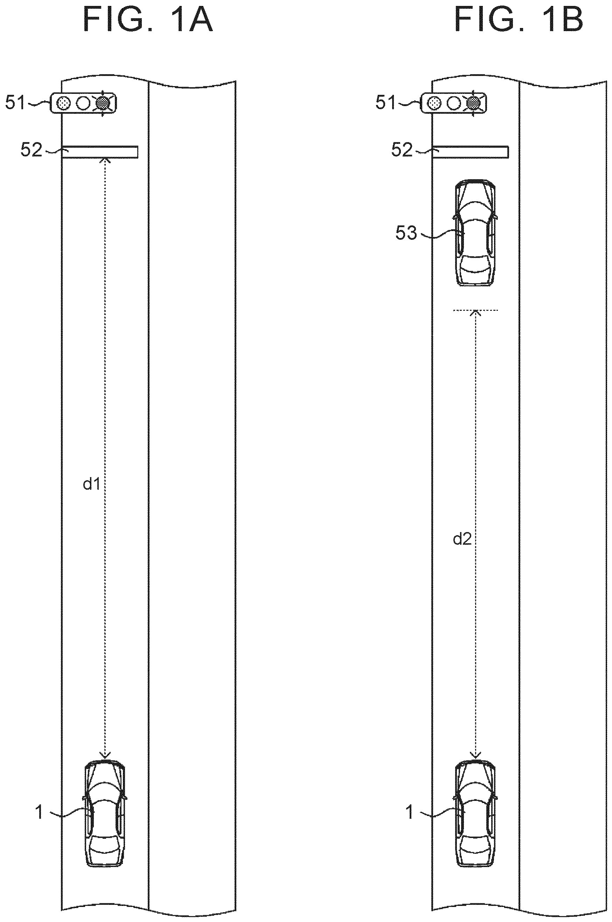

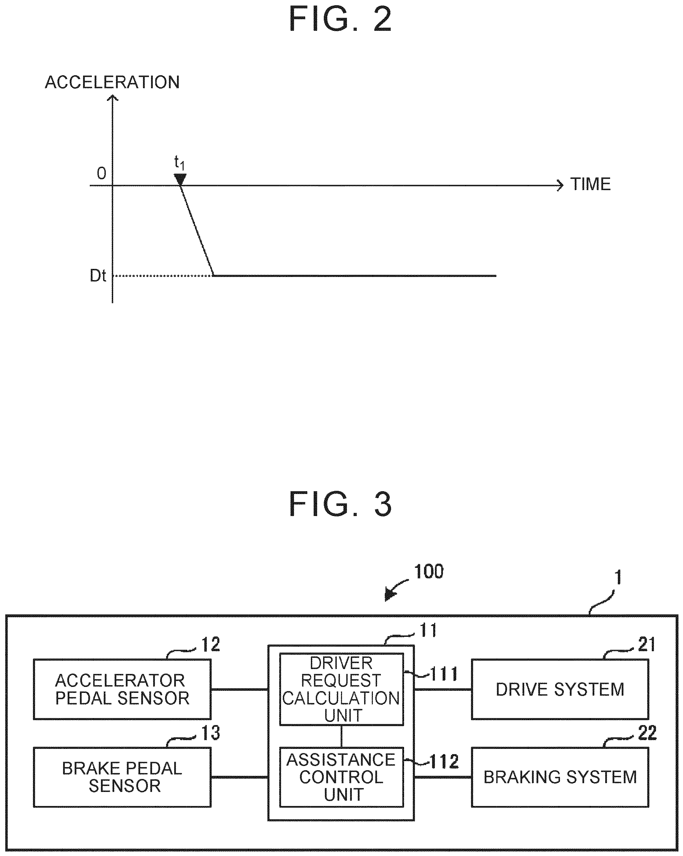

An embodiment of a driver assistance device will be described with reference to FIGS. 1A to FIG. 6B. First, an overview of deceleration assistance control that is performed by a driver assistance device 100 (see FIG. 3) according to an embodiment will be given, and then the driver assistance device 100 will be specifically described.

### Deceleration Assistance Control

Deceleration assistance control may be performed when there is an object for deceleration ahead of a vehicle (e.g., a vehicle 1 in FIGS. 1A and 1B) in the traveling direction of the vehicle, and a driver of the vehicle is depressing neither an accelerator pedal nor a brake pedal. When the deceleration assistance control is performed, the vehicle travels with slow deceleration. Namely, the vehicle decelerates relatively slowly.

The "object for deceleration" refers to an object that requires the vehicle to decelerate or stop. Specific examples of the object for deceleration include: obstacles such as pedestrians and parked vehicles; things that restrict traveling of the vehicle such as stop signs and red lights; and road structures such as intersections and curved roads. The object for deceleration may be perceived based on, e.g., information acquired by external perception means such as an in-vehicle camera or a radar, map information, information acquired by communication with the outside of the vehicle such as road-to-vehicle communication, etc. That is, since the existing techniques can be applied to the perception of the object for deceleration, detailed description thereof will be omitted.

The deceleration assistance control will be specifically described with reference to FIGS. 1A and 1B. In the case shown in FIG. 1A, there is a "red" traffic light 51 ahead of the vehicle 1 in the traveling direction of the vehicle 1. That is, the traffic light 51 is a red light that is an example of the object for deceleration. The driver assistance device 100 performs the deceleration assistance control when the driver of the vehicle 1 is depressing neither the accelerator pedal nor the brake pedal and the distance d1 between the vehicle 1 and a desired stop position (in this case, near a stop line 52) is equal to or greater than a predetermined distance.

In the case shown in FIG. 1B, there is the "red" traffic light 51 ahead of the vehicle 1 in the traveling direction of the vehicle 1 and there is a vehicle 53 that is stopped because of the "red" traffic light 51. That is, the traffic light 51 and the vehicle 53 are examples of the object for deceleration. The driver assistance device 100 performs the deceleration assistance control when the driver of the vehicle 1 is depressing neither the accelerator pedal nor the brake pedal and the distance d2 between the vehicle 1 and a desired stop position (in this case, a position that is a predetermined following distance away from the rear end of the vehicle 53) is equal to or greater than a predetermined distance.

The "predetermined distance" is a value that determines whether to perform the deceleration assistance control. The predetermined distance is typically a variable value according to the speed of the vehicle 1, but may be a fixed value. The predetermined distance may be set to a distance required for the vehicle 1 to stop or may be set to the distance required for the vehicle 1 to stop plus a margin. The distance required for the vehicle 1 to stop is obtained from the speed of the vehicle 1 and a maximum value of the deceleration for the deceleration assistance control. When the distance d1 is smaller than the predetermined distance, the deceleration assistance control will not be performed, but driver assistance may be provided by other functions such as, e.g., collision damage mitigation brake.

As shown in, e.g., FIG. 2 (in FIG. 2, it is assumed that the deceleration assistance control is started at time t₁), when the deceleration assistance control is performed, the driver assistance device 100 may gradually increase deceleration (i.e., negative acceleration) and maintain deceleration Dt once the deceleration reaches the deceleration Dt. The deceleration Dt may be set based on the distance from the vehicle 1 to the desired stop position (corresponding to the distances d1 and d2 in FIGS. 1A and 1B) and the speed of the vehicle 1 so that the vehicle 1 will stop at the desired stop position. The deceleration Dt may be the maximum value of the deceleration for the deceleration assistance control.

Even when there is an object for deceleration ahead of the vehicle 1 in the traveling direction of the vehicle 1 and the driver of the vehicle 1 is depressing neither the accelerator pedal nor the brake pedal, the driver assistance device 100 does not need to perform the deceleration assistance control when the deceleration of the vehicle 1 is greater than a predetermined value due to, e.g., the vehicle 1 traveling uphill etc. In other words, the driver assistance device 100 may perform the deceleration assistance control when there is an object for deceleration, the driver is not depressing neither the accelerator pedal nor the brake pedal, and the deceleration of the vehicle 1 is equal to or smaller than the predetermined value. The "predetermined value" may be the maximum value of the deceleration for the deceleration assistance control.

Practically, the deceleration assistance control is often performed when the driver of the vehicle 1 stops depressing the accelerator pedal (what is called accelerator off) after the driver assistance device 100 has perceived an object for deceleration. Accordingly, it can be expected that the driver will realize that the brake is applied (i.e., the vehicle 1 decelerates) automatically when the driver releases the accelerator pedal. That is, according to the driver assistance device 100 capable of performing the deceleration assistance control, the driver is less likely to accidentally step on the accelerator pedal instead of the brake pedal.

### Configuration of Driver Assistance Device

Next, the configuration of the driver assistance device 100 will be described with reference to FIG. 3. In FIG. 3, the driver assistance device 100 is mounted on the vehicle 1. The driver assistance device 100 includes an electronic control unit (ECU) 11, an accelerator pedal sensor 12, and a brake pedal sensor 13. A configuration for perceiving an object for deceleration, such as the in-vehicle camera, is not shown in FIG. 3.

The vehicle 1 is equipped with, e.g., a drive system 21, a braking system 22, etc. in addition to the driver assistance device 100. Since various existing aspects can be applied to the drive system 21 and the braking system 22, detailed description thereof will be omitted. The accelerator pedal sensor 12 and the brake pedal sensor 13 need not necessarily be provided only in the driver assistance device 100, but may be shared with other device(s) or system(s).

The ECU 11 includes a driver request calculation unit 111 and an assistance control unit 112 as either processing blocks logically implemented in the ECU 11 or processing circuits physically implemented in the ECU 11.

The driver request calculation unit 111 calculates driver-requested acceleration ACd based on the outputs of the accelerator pedal sensor 12 and the brake pedal sensor 13. The driver request calculation unit 111 calculates the driver-requested acceleration ACd having a positive value, based on the output of the accelerator pedal sensor 12. The driver request calculation unit 111 calculates the driver-requested acceleration ACd having a negative value (i.e., deceleration), based on the output of the brake pedal sensor 13. Since various existing aspects can be applied to the calculation method of the driver-requested acceleration ACd, detailed description thereof will be omitted.

The assistance control unit 112 determines whether to perform the deceleration assistance control, and determines requested deceleration DE (i.e., a desired value of the deceleration of the vehicle 1 to be achieved by the deceleration assistance control) when executing the deceleration assistance control. The vehicle 1 is decelerated when a signal based on the requested deceleration DE determined by the assistance control unit 112 is sent from the ECU 11 to the braking system 22.

When the accelerator pedal sensor 12 detects an operation of the accelerator pedal during the deceleration assistance control, the assistance control unit 112 cancels the deceleration assistance control. At this time, since the driver is operating the accelerator pedal, the driver request calculation unit 111 calculates the driver-requested acceleration ACd. Accordingly, when cancelling the deceleration assistance control, the assistance control unit 112 determines requested acceleration for the entire vehicle 1 (hereinafter referred to as the "system-requested acceleration ACs") so that the system-requested acceleration ACs becomes closer to the driver-requested acceleration ACd, while reducing the requested deceleration DE.

### Operation of Cancelling Deceleration Assistance Control

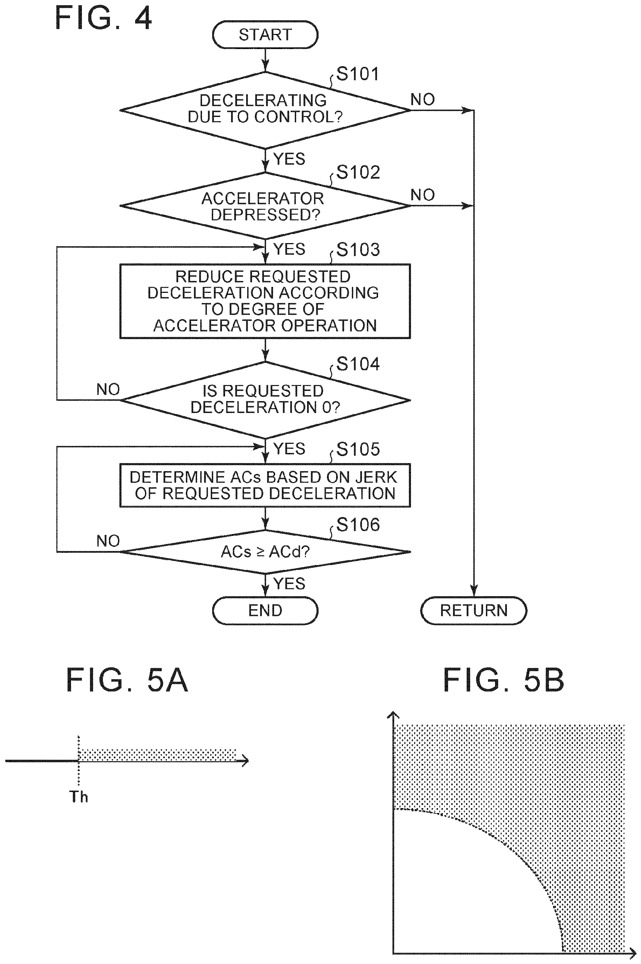

The operation of cancelling the deceleration assistance control by the assistance control unit 112 will be described with reference to the flowchart of FIG. 4.

In FIG. 4, the assistance control unit 112 determines whether the vehicle 1 is decelerating due to the deceleration assistance control (in other words, whether the deceleration assistance control is being performed) (step S101). When the assistance control unit 112 determines in step S101 that the vehicle 1 is not decelerating due to the deceleration assistance control (that is, the deceleration assistance control is not being performed) (step S101: No), the routine returns to step S101.

When the assistance control unit 112 determines in step S101 that the vehicle 1 is decelerating due to the deceleration assistance control (that is, the deceleration assistance control is being performed) (step S101: Yes), the assistance control unit 112 determines whether the driver has depressed the accelerator pedal (in other words, there is an operation of the accelerator pedal by the driver) (step S 102).

When the assistance control unit 112 determines in step S102 that the driver has not depressed the accelerator pedal (step S102: No), the routine returns to step S101. When the assistance control unit 112 determines in step S102 that the driver has depressed the accelerator pedal (step S 102: Yes), the assistance control unit 112 performs step S 103 and the subsequent steps in order to cancel the deceleration assistance control.

That is, the assistance control unit 112 reduces the requested deceleration DE according to the degree of the operation of the accelerator pedal by the driver (step S103). Specifically, the assistance control unit 112 first estimates the degree of the operation of the accelerator pedal by the driver based on the output of the accelerator pedal sensor 12. The "output of the accelerator pedal sensor 12" means the output of the accelerator pedal sensor 12 that results from the operation of the accelerator pedal by the driver and that has caused the assistance control unit 112 to determine in step S 102 that the driver has depressed the accelerator pedal.

When the accelerator pedal sensor 12 outputs, e.g., a first index for the stroke of the accelerator pedal (e.g., stroke amount), the assistance control unit 112 may estimate the degree of the operation of the accelerator pedal based on the first index. When the accelerator pedal sensor 12 outputs, e.g., a second index for a change in stroke of the accelerator pedal per unit time (e.g., depressing speed), the assistance control unit 112 may estimate the degree of the operation of the accelerator pedal based on the second index. When the accelerator pedal sensor 12 outputs, e.g., a third index for a depressing force, the assistance control unit 112 may estimate the degree of the operation of the accelerator pedal based on the third index. When the accelerator pedal sensor 12 outputs, e.g., a fourth index for a change in depressing force per unit time, the assistance control unit 112 may estimate the degree of the operation of the accelerator pedal based on the fourth index. In these cases, the degree of the operation of the accelerator pedal may be represented as the first index, the second index, the third index, or the fourth index.

When the accelerator pedal sensor 12 outputs, e.g., the first index and the second index, the assistance control unit 112 may estimate the degree of the operation of the accelerator pedal based on either or both of the first index and the second index. When the accelerator pedal sensor 12 outputs, e.g., the third index and the fourth index, the assistance control unit 112 may estimate the degree of the operation of the accelerator pedal based on either or both of the third index and the fourth index. When the accelerator pedal sensor 12 outputs, e.g., the first index, the second index, the third index, and the fourth index, the assistance control unit 112 may estimate the degree of the operation of the accelerator pedal based on at least one of the first, second, and third, and fourth indices. In these cases, the degree of the operation of the accelerator pedal may be represented as, e.g., the square root of the sum of the squares of two or more indices, or may be represented as a multidimensional index having two or more indices as components (in other words, a vector quantity).

That is, the degree of the operation of the accelerator pedal may be represented as an index based on at least one of the following values: the stroke of the accelerator pedal, a change in stroke per unit time, the depressing force on the accelerator pedal, and a change in depressing force per unit time.

Subsequently, the assistance control unit 112 reduces the requested deceleration DE according to the degree of the operation of the accelerator pedal. More specifically, the assistance control unit 112 may reduce the requested deceleration DE more quickly when the degree of the operation of the accelerator pedal by the driver is greater than a predetermined degree than when the degree of the operation of the accelerator pedal is smaller than the predetermined degree. A specific rate at which the requested deceleration DE is reduced can be determined in view of, e.g., vehicle responsiveness etc. that is required when the driver operates the accelerator pedal.

The "predetermined degree" may be an index value corresponding to the above index representing the degree of the operation of the accelerator pedal. In this case, the "predetermined degree" is an index value that determines whether to reduce the requested deceleration DE relatively quickly, and may be a predetermined fixed value or may be a variable value according to some physical quantity or parameter.

The "predetermined degree" may be set as follows. For example, the relationship between the degree of the operation of the accelerator pedal and the amount of increase in driver-requested acceleration ACd over a very short period of time according to the operation of the accelerator pedal is obtained empirically or experimentally, or by simulation, and the "predetermined degree" is set to such a degree of the operation of the accelerator pedal that the above amount of increase is larger than the amount of reduction in requested deceleration DE over the very short period of time when the requested deceleration DE is reduced so as not to cause discomfort to the driver.

For example, the assistance control unit 112 may reduce the requested deceleration DE more quickly when the degree of the operation of the accelerator pedal is equal to or greater than a threshold Th (see FIG. 5A) than when the degree of the operation of the accelerator pedal is smaller than the threshold Th. The threshold Th is an example of the "predetermined degree." In the case where the degree of the operation of the accelerator pedal is represented as a multidimensional index, the assistance control unit 112 may reduce the requested deceleration DE more quickly when a point indicated by the multidimensional index is located in, e.g., a shaded area of a vector space shown in FIG. 5B (in this example, a two-dimensional vector space) than when the point indicated by the multidimensional index is located outside the shaded area of the vector space. In this case, the boundary line of the shaded area in FIG. 5B is an example of the "predetermined degree."

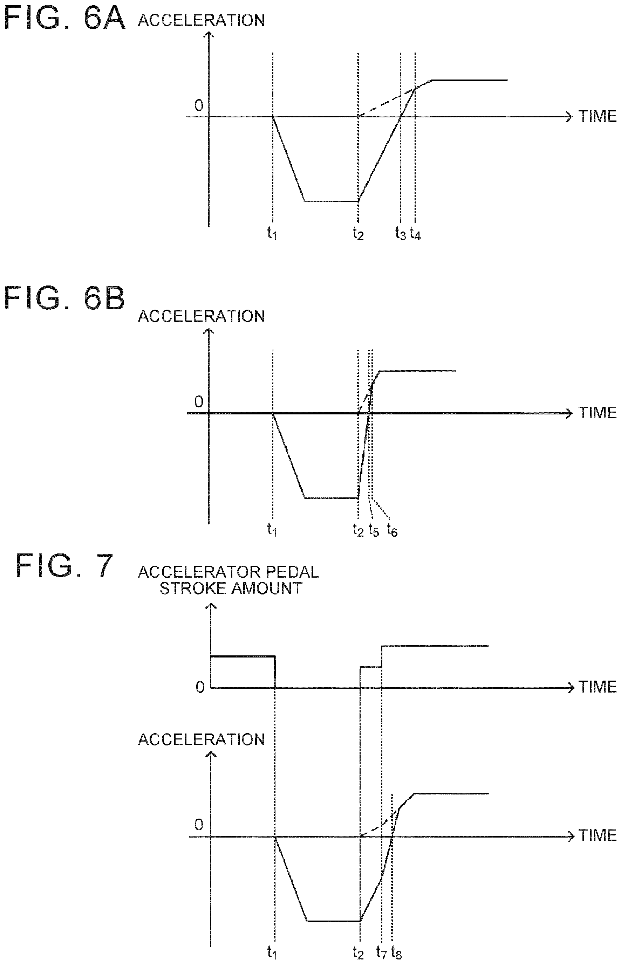

When the degree of the operation of the accelerator pedal is smaller than the predetermined degree, the assistance control unit 112 reduces the requested deceleration DE relatively slowly so that the acceleration increases relatively slowly (in other words, so that the deceleration (i.e., negative acceleration) decreases relatively slowly), as shown by, e.g., a continuous line in FIG. 6A. On the other hand, when the degree of the operation of the accelerator pedal is equal to or greater than the predetermined degree, the assistance control unit 112 reduces the requested deceleration DE relatively quickly so that the acceleration increases relatively quickly (in other words, so that the deceleration decreases relatively quickly), as shown by, e.g., a continuous line in FIG. 6B. That is, the assistance control unit 112 changes the rate of change in requested deceleration DE per unit time (i.e., the time derivative of the requested deceleration DE: jerk) according to whether the degree of the operation of the accelerator pedal is equal to or greater than the predetermined degree.

Time t₁ in FIGS. 6A and 6B is the time when the deceleration assistance control is started (corresponding to time t₁ in FIG. 2). Time t₂ is the time when it is determined in the above step S102 that the driver has depressed the accelerator pedal (in other words, the time when the driver operated the accelerator pedal during the deceleration assistance control). A dashed line indicates the driver-requested acceleration ACd.

Alternatively, the assistance control unit 112 may reduce the requested deceleration DE more quickly when the degree of the operation of the accelerator pedal by the driver is great than when the degree of the operation of the accelerator pedal is small. For example, the assistance control unit 112 may determine whether the degree of the operation of the accelerator pedal is great or small as follows. The assistance control unit 112 may determine that the degree of the operation of the accelerator pedal is great when the value of the index representing the degree of the operation of the accelerator pedal is equal to or greater than the threshold Th (see FIG. 5A), and may determine that the degree of the operation of the accelerator pedal is small when the value of this index is smaller than the threshold Th. In the case where the degree of the operation of the accelerator pedal is represented as a multidimensional index, the assistance control unit 112 may determine that the degree of the operation of the accelerator pedal is great when the point indicated by the multidimensional index is located in, e.g., the shaded area of the vector space shown in FIG. 5B (in this example, a two-dimensional vector space), and may determine that the degree of the operation of the accelerator pedal is small when the point indicated by the multidimensional index is located outside the shaded area of the vector space.

When the assistance control unit 112 determines that the degree of the operation of the accelerator pedal is small, the assistance control unit 112 reduces the requested deceleration DE relatively slowly so that the acceleration increases relatively slowly (in other words, so that the deceleration (i.e., negative acceleration) decreases relatively slowly), as shown by, e.g., the continuous line in FIG. 6A. On the other hand, when the assistance control unit 112 determines that the degree of the operation of the accelerator pedal is great, the assistance control unit 112 reduces the requested deceleration DE relatively quickly so that the acceleration increases relatively quickly (in other words, so that the deceleration decreases relatively quickly), as shown by, e.g., the continuous line in FIG. 6B. That is, the assistance control unit 112 change the rate of change in requested deceleration DE per unit time (i.e., the time derivative of the requested deceleration DE: jerk) according to whether the degree of the operation of the accelerator pedal is great or small.

Referring back to FIG. 4, after step S103, the assistance control unit 112 determines whether the requested deceleration DE is 0 (step S104). When the assistance control unit 112 determines in step S104 that the requested deceleration DE is not 0 (step S104: No), the routine proceeds to step S103.

When the assistance control unit 112 determines in step S104 that the requested deceleration DE is 0 (step S 104: Yes), the assistance control unit 112 determines the system-requested acceleration ACs based on the jerk of the requested deceleration DE (step S105).

Step S105 will be further described with reference to FIGS. 6A and 6B. In FIG. 6A, it is assumed that the requested deceleration DE becomes 0 at time t₃. For example, the assistance control unit 112 determines the system-requested acceleration ACs so that the system-requested acceleration ACs increases at a similar rate of change with time to the jerk of the requested deceleration DE (compare the slope of the continuous line indicating acceleration from time t₂ to time t₃ and the slope of the continuous line indicating acceleration from t₃ to time t₄ in FIG. 6A).

In FIG. 6B, it is assumed that the requested deceleration DE becomes 0 at time t₅. For example, the assistance control unit 112 determines the system-requested acceleration ACs so that the system-requested acceleration ACs increases at a similar rate of change with time to the jerk of the requested deceleration DE (compare the slope of the continuous line indicating acceleration from time t₂ to time t₅ and the slope of the continuous line indicating acceleration from time t₅ to time t₆ in FIG. 6B).

Referring back to FIG. 4, after step S105, the assistance control unit 112 determines whether the system-requested acceleration ACs is equal to or greater than the driver-requested acceleration ACd (step S106). When the assistance control unit 112 determines in step S106 that the system-requested acceleration ACs is smaller than the driver-requested acceleration ACd (step S106: No), the routine proceeds to step S105.

When the assistance control unit 112 determines in step S106 that the system-requested acceleration ACs is equal to or greater than the driver-requested acceleration ACd (step S106: Yes), the assistance control unit 112 ends the operation of cancelling the deceleration assistance control. The system-requested acceleration ACs is then determined based on the driver-requested acceleration ACd. At this time, the system-requested acceleration ACs may be determined by the driver request calculation unit 111 or may be determined by the assistance control unit 112.

For example, when the assistance control unit 112 determines at time t₄ in FIG. 6A in step S106 that the system-requested acceleration ACs is equal to or greater than the driver-requested acceleration ACd, the assistance control unit 112 ends the operation of canceling the deceleration assistance control, and after that, the acceleration will change based on the driver-requested acceleration ACd. Similarly, when the assistance control unit 112 determines at time t₆ in FIG. 6B in step S106 that the system-requested acceleration ACs is equal to or greater than the driver-requested acceleration ACd, the assistance control unit 112 ends the operation of canceling the deceleration assistance control, and after that, the acceleration will change based on the driver-requested acceleration ACd.

Although not specified in the above description for convenience, the assistance control unit 112 determines the system-requested acceleration ACs even during steps S103 and S104. Accordingly, during the period in which steps S103 and S104 are performed (e.g., the period from time t₂ to time t₃ in FIG. 6A, or the period from time t₂ to time t₅ in FIG. 6B), a signal based on the requested deceleration DE is sent from the ECU 11 to the braking system 22, and a signal based on the system-requested acceleration ACs is sent from the ECU 11 to the drive system 21.

### Technical Effects

When the driver operates the accelerator pedal during deceleration assistance control and the deceleration assistance control is canceled due to the operation of the accelerator pedal by the driver, the driver may feel a sudden change in deceleration unless measures are taken. The driver assistance device 100 therefore reduces the requested deceleration DE according to the degree of the operation of the accelerator pedal by the driver. Specifically, the driver assistance device 100 reduces the requested deceleration DE more quickly when the degree of the operation of the accelerator pedal is equal to or greater than the predetermined degree than when the degree of the operation of the accelerator pedal is smaller than the predetermined degree, or reduces the requested deceleration DE more quickly when the degree of the operation of the accelerator pedal is great than when the degree of the operation of the accelerator pedal is small. In other words, the driver assistance device 100 reduces the requested deceleration DE more slowly when the degree of the operation of the accelerator pedal is smaller than the predetermined degree than when the degree of the operation of the accelerator pedal is equal to or greater than the predetermined degree, or reduces the requested deceleration DE more slowly when the degree of the operation of the accelerator pedal is small than when the degree of the operation of the accelerator pedal is great.

As shown in, e.g., FIG. 6B, when the degree of the operation of the accelerator pedal is relatively great, the acceleration changes from negative to positive relatively early. Accordingly, the driver often feels that the vehicle 1 is accelerating before the driver can even feel a change in deceleration. That is, in this case, it is unlikely that the driver feels discomfort when the deceleration assistance control is canceled. On the other hand, as shown in, e.g., FIG. 6A, when the degree of the operation of the accelerator pedal is relatively small, the acceleration changes relatively slowly. In this case, it is highly unlikely that the driver feels discomfort when the deceleration assistance control is canceled.

Therefore, the driver assistance device 100 can reduce the possibility that the driver may feel discomfort when the deceleration assistance control is canceled due to the driver's operation of the accelerator pedal.

### Modifications

In the above embodiment, an aspect is described in which whether the degree of the operation of the accelerator pedal is great or small is determined using, e.g., the threshold Th (see FIG. 5A). However, the number of thresholds to be used for the determination is not limited to one, and a plurality of thresholds may be used for the determination. That is, the degree of the operation of the accelerator pedal may be determined in multiple stages. In this case, the greater the degree of the operation of the accelerator pedal, the more quickly the requested deceleration DE may be reduced. Alternatively, the degree of reduction in requested deceleration DE may be continuously changed according to the degree of the operation of the accelerator pedal. In this case as well, the greater the degree of the operation of the accelerator pedal, the more quickly the requested deceleration DE may be reduced.

The degree of reduction in requested deceleration DE may be changed according to the operation of the accelerator pedal performed by the driver after cancelling of the deceleration assistance control is started. As shown in, e.g., FIG. 7, in the case where cancelling of the deceleration assistance control is started at time t₂ and the stroke amount of the accelerator pedal increases at time t₇, the assistance control unit 112 may increase the jerk of the requested deceleration DE so that the requested deceleration DE decreases more quickly (compare the slope of a continuous line indicating acceleration from time t₂ to time t₇ and the slope of the continuous line indicating acceleration from time t₇ to time t₈ in FIG. 7).

Various aspects of the invention derived from the embodiment and modifications described above will be described below.

A driver assistance device according to one aspect of the present invention is a driver assistance device configured to perform deceleration assistance control when a driver of a vehicle is not depressing an accelerator pedal, the deceleration assistance control being control for automatically decelerating the vehicle. The driver assistance device includes: a detection unit configured to detect an operation of the accelerator pedal; and a control unit configured to cancel the deceleration assistance control when the operation of the accelerator pedal is detected during the deceleration assistance control. The control unit is configured to reduce a deceleration control amount for the deceleration assistance control according to a degree of the operation of the accelerator pedal, when cancelling the deceleration assistance control.

In the above embodiment, the "vehicle 1" is an example of the "vehicle," the "accelerator pedal sensor 12" is an example of the "detection unit," and the "assistance control unit 112" is an example of the "control unit." The "requested deceleration DE" according to the above embodiment is an example of the "deceleration control amount."

In the driver assistance device, the control unit may be configured to reduce the deceleration control amount for the deceleration assistance control more quickly when the degree of the operation of the accelerator pedal is greater than a predetermined degree than when the degree of the operation of the accelerator pedal is smaller than the predetermined degree, when cancelling the deceleration assistance control.

In the driver assistance device, the control unit may be configured to reduce the deceleration control amount for the deceleration assistance control more quickly when the degree of the operation of the accelerator pedal is great than when the degree of the operation of the accelerator pedal is small, when cancelling the deceleration assistance control.

In the driver assistance device, the control unit may be configured to reduce the deceleration control amount for the deceleration assistance control in such a manner that the greater the degree of the operation of the accelerator pedal, the more quickly the deceleration control amount for the deceleration assistance control is reduced, when cancelling the deceleration assistance control.

In the driver assistance device, the degree of the operation may be represented as an index based on at least one of the following values: a stroke of the accelerator pedal, a change in the stroke per unit time, a depressing force on the accelerator pedal, and a change in the depressing force per unit time.

In the driver assistance device, the control unit may be configured to determine target acceleration for the vehicle based on the deceleration control amount and requested acceleration from the driver that is estimated from the operation of the accelerator pedal, when canceling the deceleration assistance control. The control unit may be configured to determine the target acceleration in such a manner that, when the target acceleration is smaller than the requested acceleration, a change in the target acceleration with time corresponds to a change in the deceleration control amount with time. The control unit may be configured to determine the target acceleration in such a manner that, when the target acceleration has reached the requested acceleration, the change in the target acceleration with time corresponds to a change in the requested acceleration with time.

In the above embodiment, the "driver-requested acceleration ACd" is an example of the "requested acceleration," the "system-requested acceleration ACs" is an example of the "target acceleration," and the "jerk of the requested deceleration DE" is an example of the "change in the deceleration control amount with time."

In the driver assistance device, the control unit may be configured to change a way of reducing the deceleration control amount according to the operation of the accelerator pedal performed after cancellation of the deceleration assistance control is started, when cancelling the deceleration assistance control.

In the driver assistance device, the deceleration assistance control may be performed when the driver is not depressing the accelerator pedal and deceleration of the vehicle is equal to or smaller than a predetermined value.

In the driver assistance device, the deceleration assistance control may be performed when the driver is not depressing the accelerator pedal and a distance between an object for deceleration and the vehicle is equal to or greater than a predetermined distance, the object for deceleration being an object that requires the vehicle to decelerate or stop.

The present invention is not limited to the above embodiment and can be modified within the technical scope of the present invention, which is defined by the appended claims.

## Claims

1. A driver assistance device (100) configured to perform deceleration assistance control when a driver of a vehicle (1) is not depressing an accelerator pedal, the deceleration assistance control being control for automatically decelerating the vehicle (1), the driver assistance device (100) comprising:
a detection unit (12) configured to detect an operation of the accelerator pedal; and
a control unit (112) configured to cancel the deceleration assistance control when the operation of the accelerator pedal is detected during the deceleration assistance control, wherein
the control unit (112) is configured to reduce a deceleration control amount for the deceleration assistance control according to a degree of the operation of the accelerator pedal, when cancelling the deceleration assistance control;
**characterized in that** the control unit (112) is configured to:
determine target acceleration for the vehicle (1) based on the deceleration control amount and requested acceleration from the driver that is estimated from the operation of the accelerator pedal, when canceling the deceleration assistance control;
determine the target acceleration such that a change in the target acceleration with time corresponds to a change in the deceleration control amount with time, when the target acceleration is smaller than the requested acceleration; and
determine the target acceleration such that the change in the target acceleration with time corresponds to a change in the requested acceleration with time, when the target acceleration reaches the requested acceleration.

2. The driver assistance device (100) according to claim 1, wherein the control unit (112) is configured to, when cancelling the deceleration assistance control, reduce the deceleration control amount for the deceleration assistance control quickly based on the degree of the operation of the accelerator pedal being higher than a predetermined degree compared to the degree of the operation of the accelerator pedal being lower than the predetermined degree.

3. The driver assistance device (100) according to claim 1, wherein the control unit (112) is configured to, when cancelling the deceleration assistance control, reduce the deceleration control amount for the deceleration assistance control quickly based on the degree of the operation of the accelerator pedal being high compared to the degree of the operation of the accelerator pedal being low.

4. The driver assistance device (100) according to claim 1, wherein the control unit (112) is configured to, when cancelling the deceleration assistance control, reduce the deceleration control amount for the deceleration assistance control such that the higher the degree of the operation of the accelerator pedal, the more quickly the deceleration control amount for the deceleration assistance control is reduced.

5. The driver assistance device (100) according to any of claims 1 to 4, wherein the degree of the operation is represented as an index based on at least one of a stroke of the accelerator pedal, a change in the stroke per unit time, a depressing force on the accelerator pedal, and a change in the depressing force per unit time.

6. The driver assistance device (100) according to any of claims 1 to 5, wherein the control unit (112) is configured to change a way of reducing the deceleration control amount according to the operation of the accelerator pedal performed after cancellation of the deceleration assistance control is started, when cancelling the deceleration assistance control.

7. The driver assistance device (100) according to any of claims 1 to 6, wherein the deceleration assistance control is performed when the driver is not depressing the accelerator pedal and deceleration of the vehicle (1) is equal to or smaller than a predetermined value.

8. The driver assistance device (100) according to any of claims 1 to 7, wherein the deceleration assistance control is performed when the driver is not depressing the accelerator pedal and a distance between an object for deceleration and the vehicle is equal to or greater than a predetermined distance, the object being an object that requires the vehicle (1) to decelerate or stop.

## Patentansprüche

1. Fahrerassistenzvorrichtung (100), die dazu ausgestaltet ist, eine Verlangsamungs-Assistenzsteuerung durchzuführen, wenn ein Fahrer eines Fahrzeugs (1) ein Beschleunigungspedal nicht betätigt, wobei die Verlangsamungs-Assistenzsteuerung eine Steuerung ist, um das Fahrzeug (1) automatisch zu verlangsamen, wobei die Fahrerassistenzvorrichtung (100) umfasst:
eine Erfassungseinheit (12), die dazu ausgestaltet ist, eine Betätigung des Beschleunigungspedals zu erfassen, und
eine Steuereinheit (112), die dazu ausgestaltet ist, die Verlangsamungs-Assistenzsteuerung abzubrechen, wenn die Betätigung des Beschleunigungspedals während der Verlangsamungs-Assistenzsteuerung erfasst wird, wobei
die Steuereinheit (112) dazu ausgestaltet ist, ein Verlangsamungs-Steuerungsausmaß für die Verlangsamungs-Assistenzsteuerung in Übereinstimmung mit einem Grad der Betätigung des Beschleunigungspedals zu verringern, wenn die Verlangsamungs-Assistenzsteuerung abgebrochen wird,
**dadurch gekennzeichnet, dass** die Steuereinheit (112) dazu ausgestaltet ist:
wenn die Verlangsamungs-Assistenzsteuerung abgebrochen wird, eine Zielbeschleunigung für das Fahrzeug (1) auf Grundlage des Verlangsamungs-Steuerungsausmaßes und der von dem Fahrer angeforderten Beschleunigung zu bestimmen, die aus der Betätigung des Beschleunigungspedals geschätzt wird,
die Zielbeschleunigung so zu bestimmen, dass eine Änderung in der Zielbeschleunigung mit der Zeit einer Änderung in dem Verlangsamungs-Steuerungsausmaß mit der Zeit entspricht, wenn die Zielbeschleunigung geringer ist als die angeforderte Beschleunigung, und
die Zielbeschleunigung so zu bestimmen, dass die Änderung in der Zielbeschleunigung mit der Zeit einer Änderung in der angeforderten Beschleunigung mit der Zeit entspricht, wenn die Zielbeschleunigung die angeforderte Beschleunigung erreicht.

2. Fahrerassistenzvorrichtung (100) nach Anspruch 1, wobei die Steuereinheit (112) dazu ausgestaltet ist, wenn die Verlangsamungs-Assistenzsteuerung abgebrochen wird, das Verlangsamungs-Steuerungsausmaß für die Verlangsamungs-Assistenzsteuerung auf Grundlage dessen, dass der Grad der Betätigung des Beschleunigungspedals höher ist als ein vorbestimmter Grad, verglichen damit, dass der Grad der Betätigung des Beschleunigungspedals geringer ist als der vorbestimmte Grad, rasch zu verringern.

3. Fahrerassistenzvorrichtung (100) nach Anspruch 1, wobei die Steuereinheit (112) dazu ausgestaltet ist, wenn die Verlangsamungs-Assistenzsteuerung abgebrochen wird, das Verlangsamungs-Steuerungsausmaß für die Verlangsamungs-Assistenzsteuerung auf Grundlage dessen, dass der Grad der Betätigung des Beschleunigungspedals hoch ist, verglichen damit, dass der Grad der Betätigung des Beschleunigungspedals gering ist, rasch zu verringern.

4. Fahrerassistenzvorrichtung (100) nach Anspruch 1, wobei die Steuereinheit (112) dazu ausgestaltet ist, wenn die Verlangsamungs-Assistenzsteuerung abgebrochen wird, das Verlangsamungs-Steuerungsausmaß für die Verlangsamungs-Assistenzsteuerung so zu verringern, dass das Verlangsamungs-Steuerungsausmaß für die Verlangsamungs-Assistenzsteuerung umso rascher verringert wird, je höher der Grad der Betätigung des Beschleunigungspedals ist.

5. Fahrerassistenzvorrichtung (100) nach einem der Ansprüche 1 bis 4, wobei der Grad der Betätigung als ein Index auf Grundlage von zumindest einem von einem Betätigungsweg des Beschleunigungspedals, einer Veränderung in dem Betätigungsweg pro Zeiteinheit, einer Druckkraft auf das Beschleunigungspedal und einer Änderung in der Druckkraft pro Zeiteinheit dargestellt wird.

6. Fahrerassistenzvorrichtung (100) nach einem der Ansprüche 1 bis 5, wobei die Steuereinheit (112) dazu ausgestaltet ist, die Art der Verringerung des Verlangsamungs-Steuerungsausmaßes in Übereinstimmung mit der Betätigung des Beschleunigungspedals zu verändern, die durchgeführt wird, nachdem der Abbruch der Verlangsamungs-Assistenzsteuerung gestartet wurde, wenn die Verlangsamungs-Assistenzsteuerung abgebrochen wird.

7. Fahrerassistenzvorrichtung (100) nach einem der Ansprüche 1 bis 6, wobei die Verlangsamungs-Assistenzsteuerung durchgeführt wird, wenn der Fahrer das Beschleunigungspedal nicht herunterdrückt und die Verlangsamung des Fahrzeugs (1) gleich einem oder kleiner als ein vorbestimmter Wert ist.

8. Fahrerassistenzvorrichtung (100) nach einem der Ansprüche 1 bis 7, wobei die Verlangsamungs-Assistenzsteuerung durchgeführt wird, wenn der Fahrer das Beschleunigungspedal nicht herunterdrückt und ein Abstand zwischen einem Objekt zur Verlangsamung und dem Fahrzeug gleich einem oder größer als ein vorbestimmter Abstand ist, wobei das Objekt ein Objekt ist, welches eine Verlangsamung oder einen Halt des Fahrzeugs (1) notwendig macht.

## Revendications

1. Dispositif d'aide à la conduite (100) configuré pour effectuer une commande d'aide à la décélération lorsqu'un conducteur d'un véhicule (1) n'appuie pas sur une pédale d'accélérateur, la commande d'aide à la décélération étant une commande de décélération automatique du véhicule (1), le dispositif d'aide à la conduite (100) comprenant :
une unité de détection (12) configurée pour détecter un actionnement de la pédale d'accélérateur ; et
une unité de commande (112) configurée pour annuler la commande d'aide à la décélération lorsque l'actionnement de la pédale d'accélérateur est détecté pendant la commande d'aide à la décélération, dans lequel
l'unité de commande (112) est configurée pour réduire une quantité de commande de décélération de la commande d'aide à la décélération selon un degré de l'actionnement de la pédale d'accélérateur, lors de l'annulation de la commande d'aide à la décélération ;
**caractérisé en ce que** l'unité de commande (112) est configurée pour :
déterminer une accélération cible du véhicule (1) sur la base de la quantité de commande de décélération et d'une accélération demandée par le conducteur qui est estimée à partir de l'actionnement de la pédale d'accélérateur, lors de l'annulation de la commande d'aide à la décélération ;
déterminer l'accélération cible de sorte qu'une variation de l'accélération cible en fonction du temps corresponde à une variation de la quantité de commande de décélération en fonction du temps, lorsque l'accélération cible est inférieure à l'accélération demandée ; et
déterminer l'accélération cible de sorte que la variation de l'accélération cible en fonction du temps corresponde à une variation de l'accélération demandée en fonction du temps, lorsque l'accélération cible atteint l'accélération demandée.

2. Dispositif d'aide à la conduite (100) selon la revendication 1, dans lequel l'unité de commande (112) est configurée pour, lors de l'annulation de la commande d'aide à la décélération, réduire la quantité de commande de décélération de la commande d'aide à la décélération rapidement sur la base d'un degré de l'actionnement de la pédale d'accélérateur supérieur à un degré prédéterminé en comparaison avec le un degré de l'actionnement de la pédale d'accélérateur inférieur au degré prédéterminé.

3. Dispositif d'aide à la conduite (100) selon la revendication 1, dans lequel l'unité de commande (112) est configurée pour, lors de l'annulation de la commande d'aide à la décélération, réduire la quantité de commande de décélération de la commande d'aide à la décélération rapidement sur la base d'un degré de l'actionnement de la pédale d'accélérateur élevé en comparaison avec un faible degré de l'actionnement de la pédale d'accélérateur.

4. Dispositif d'aide à la conduite (100) selon la revendication 1, dans lequel l'unité de commande (112) est configurée pour, lors de l'annulation de la commande d'aide à la décélération, réduire la quantité de commande de décélération de la commande d'aide à la décélération de sorte que plus le degré de l'actionnement de la pédale d'accélérateur est élevé, plus la quantité de commande de décélération de la commande d'aide à la décélération est réduite rapidement.

5. Dispositif d'aide à la conduite (100) selon l'une des revendications 1 à 4, dans lequel le degré de l'actionnement est représenté par un indice basé sur au moins un parmi une course de la pédale d'accélérateur, une variation de la course par unité de temps, une force d'enfoncement sur la pédale d'accélérateur, et une variation de la force d'enfoncement par unité de temps.

6. Dispositif d'aide à la conduite (100) selon l'une des revendications 1 à 5, dans lequel l'unité de commande (112) est configurée pour modifier la manière de réduire la quantité de commande de décélération selon l'actionnement de la pédale d'accélérateur effectué après le début de l'annulation de la commande d'aide à la décélération, lors de l'annulation de la commande d'aide à la décélération.

7. Dispositif d'aide à la conduite (100) selon l'une des revendications 1 à 6, dans lequel la commande d'aide à la décélération est effectuée lorsque le conducteur n'appuie pas sur la pédale d'accélérateur et que la décélération du véhicule (1) est égale ou inférieure à une valeur prédéterminée.

8. Dispositif d'aide à la conduite (100) selon l'une des revendications 1 à 7, dans lequel la commande d'aide à la décélération est effectuée lorsque le conducteur n'appuie pas sur la pédale d'accélérateur et qu'une distance entre un objet de décélération et le véhicule est égale ou supérieure à une distance prédéterminée, l'objet étant un objet qui nécessite la décélération ou l'arrêt du véhicule (1).
